# EUROPEAN PATENT APPLICATION

(11) **EP 4 826 499 A1**
(43) Date of publication of application: **21.10.2026**
(21) Application number: 24914892.5
(22) Date of filing: 19.09.2024
(51) Int. Cl.: G06F 3/042

(54) **ELECTRONIC DEVICE**

(30) Priority: 05.01.2024 CN 202410028340
(71) Applicant: Huawei Technologies Co., Ltd., Shenzhen, Guangdong 518129 (CN)
(72) Inventor: LI, Lingzhi, Shenzhen, Guangdong 518129 (CN); REN, Jingxuan, Shenzhen, Guangdong 518129 (CN); YANG, Wenjian, Shenzhen, Guangdong 518129 (CN); JIA, Weibo, Shenzhen, Guangdong 518129 (CN); ZHAO, Menglong, Shenzhen, Guangdong 518129 (CN)
(74) Representative: Thun, Clemens
(86) International application number: PCT/CN2024/119740
(87) International publication number: WO 2025/145670

(57) **Abstract**

This application relates to the field of electronic product technologies, and discloses an electronic device. The electronic device has a touch function, and includes a display cover plate, a housing, a light-emitting element, and a light-receiving element. The display cover plate includes a touch portion and an edge portion disposed around the touch portion, the edge portion includes a first edge portion and a second edge portion, the first edge portion includes a first inclined surface, the second edge portion includes a second inclined surface, the first inclined surface and the second inclined surface are inclined relative to a first plane, and the first plane is perpendicular to a thickness direction of the display cover plate. The display cover plate and the housing together enclose a cavity, the light-emitting element is disposed in the cavity at a position corresponding to the first inclined surface, and the light-receiving element is disposed in the cavity at a position corresponding to the second inclined surface. In this way, the display cover plate can meet both a sealing requirement and a light propagation requirement, thereby implementing a touch function and a sealing function, effectively reducing an overall size of the electronic device, and facilitating miniaturization development.

## Description

This application claims priority to Chinese Patent Application No. 202410028340.9, filed with the China National Intellectual Property Administration on January 5, 2024 and entitled "ELECTRONIC DEVICE", which is incorporated herein by reference in its entirety.

### TECHNICAL FIELD

This application relates to the field of electronic product technologies, and in particular, to an electronic device.

### BACKGROUND

With development of science and technology, electronic devices (for example, smart watches and smart bands) have become an indispensable part of people's daily lives. Therefore, requirements on the electronic devices are increasingly high. In one aspect, it is expected that the electronic device can be used in various environments, for example, in daily scenarios such as hand washing, bathing, swimming, and diving. Therefore, the electronic device needs to have an underwater touch function. In the other aspect, it is expected that the electronic device is overall more compact, thin, and lightweight, making it portable for users.

However, although a current touch solution for the electronic device can implement underwater touch, an overall size of the electronic device is increased, which is not conducive to miniaturization development of the electronic device.

### SUMMARY

To resolve the foregoing technical problem, this application provides an electronic device. The following describes this application from a plurality of aspects, and mutual reference may be made to implementations and beneficial effects of the following plurality of aspects.

According to a first aspect of this application, an electronic device is provided. The electronic device has a touch function, and includes a display cover plate, a housing, a light-emitting element, and a light-receiving element. The display cover plate includes a touch portion and an edge portion disposed around the touch portion, the edge portion includes a first edge portion and a second edge portion, the first edge portion includes a first inclined surface, the second edge portion includes a second inclined surface, the first inclined surface and the second inclined surface are inclined relative to a first plane, and the first plane is perpendicular to a thickness direction of the display cover plate. The display cover plate and the housing together enclose a cavity, the light-emitting element is disposed in the cavity at a position corresponding to the first inclined surface, and the light-receiving element is disposed in the cavity at a position corresponding to the second inclined surface.

According to an implementation of this application, the first inclined surface of the first edge portion can reflect light from the light-emitting element.

When the electronic device is in a non-touch state, that is, when a user does not touch the touch portion of the display cover plate of the electronic device, a medium outside the display cover plate may be water, air, or the like. In this case, the light reflected by the first inclined surface can propagate inside the touch portion by total internal reflection until the light reaches the second inclined surface of the second edge portion and is reflected by the second inclined surface to the light-receiving element.

When the electronic device is in a touch state, that is, when the user touches the touch portion of the display cover plate of the electronic device, the medium outside the display cover plate changes from water or air to another medium (for example, a finger of the user). That is, a refractive index of the medium outside the display cover plate changes, which destroys the total internal reflection of the light inside the touch portion of the display cover plate, and the light-receiving element cannot receive the light from the light-emitting element, or intensity of the light received from the light-emitting element is weak. In this way, touch sensing can be implemented based on light reception by the light-receiving element.

The display cover plate can meet both a sealing requirement and a light propagation requirement, thereby implementing a touch function and a sealing function. Therefore, no light-transmissive sealing member needs to be additionally disposed in the electronic device, thereby reducing thickness space occupied by the light-transmissive sealing member, further effectively reducing an overall size of the electronic device, and facilitating miniaturization development.

In a possible implementation of the first aspect, an inclination angle of the first inclined surface relative to the first plane is 16° to 43°.

In this way, an incident angle of light incident on the touch portion can meet a total internal reflection condition for the electronic device in the non-touch state, while not meeting a total internal reflection condition for the electronic device in the touch state. Therefore, when the electronic device is in the non-touch state, the light can propagate inside the touch portion by total internal reflection; and when the electronic device is in the touch state, the light cannot propagate inside the touch portion by total internal reflection, thereby implementing touch sensing.

In a possible implementation of the first aspect, a thickness of the touch portion is 0.8 mm to 2.5 mm.

In this way, it can be ensured that the touch portion of the display cover plate is neither too thin and thus prone to breakage, nor too thick as to cause an excessively large total internal reflection step length of light inside the touch portion, thereby causing excessively low touch precision.

In a possible implementation of the first aspect, light emitted by the light-emitting element propagates in the touch portion by total internal reflection, and a total internal reflection step length of the light in the touch portion is 0 mm to 6 mm. In this way, it is ensured that the electronic device has better touch precision.

In a possible implementation of the first aspect, a light transmittance of the display cover plate is greater than 80%.

In a possible implementation of the first aspect, a material of the display cover plate is sapphire or glass.

According to a second aspect of this application, an electronic device is provided. The electronic device has a touch function, and includes a display cover plate, a light-emitting element, and a light-receiving element. The display cover plate includes a touch portion and an edge portion disposed around the touch portion, the edge portion includes a first edge portion and a second edge portion, the first edge portion includes a first inclined surface, the first inclined surface is inclined relative to a first plane, the second edge portion includes a second inclined surface, the second inclined surface is inclined relative to the first plane, and the first plane is perpendicular to a thickness direction of the display cover plate. The light-emitting element is disposed on the first inclined surface of the first edge portion, and the light-receiving element is disposed on the second inclined surface of the second edge portion.

According to an implementation of this application, the first inclined surface of the first edge portion can transmit light from the light-emitting element.

When the electronic device is in a non-touch state, that is, when a user does not touch the touch portion of the display cover plate of the electronic device, a medium outside the display cover plate may be water, air, or the like. In this case, the light transmitted by the first inclined surface can propagate inside the touch portion by total internal reflection until the light reaches the second inclined surface of the second edge portion and passes through the second inclined surface into the light-receiving element.

When the electronic device is in a touch state, that is, when the user touches the touch portion of the display cover plate of the electronic device, the medium outside the display cover plate changes from water or air to another medium (for example, a finger of the user). That is, a refractive index of the medium outside the display cover plate changes, which destroys the total internal reflection of the light inside the touch portion of the display cover plate, and the light-receiving element cannot receive the light from the light-emitting element, or intensity of the light received from the light-emitting element is weak. In this way, touch sensing can be implemented based on light reception by the light-receiving element.

The display cover plate can meet both a sealing requirement and a light propagation requirement, thereby implementing a touch function and a sealing function. Therefore, no light-transmissive sealing member needs to be additionally disposed in the electronic device, thereby reducing thickness space occupied by the light-transmissive sealing member, further effectively reducing an overall size of the electronic device, and facilitating miniaturization development.

In a possible implementation of the second aspect, an inclination angle of the first inclined surface relative to the first plane is 41° to 78°.

In this way, an incident angle of light incident on the touch portion can meet a total internal reflection condition for the electronic device in the non-touch state, while not meeting a total internal reflection condition for the electronic device in the touch state. Therefore, when the electronic device is in the non-touch state, the light can propagate inside the touch portion by total internal reflection; and when the electronic device is in the touch state, the light cannot propagate inside the touch portion by total internal reflection, thereby implementing touch sensing.

In a possible implementation of the second aspect, a thickness of the touch portion is 0.8 mm to 2.5 mm.

In this way, it can be ensured that the touch portion of the display cover plate is neither too thin and thus prone to breakage, nor too thick as to cause an excessively large total internal reflection step length of light inside the touch portion, thereby causing excessively low touch precision.

In a possible implementation of the second aspect, light emitted by the light-emitting element propagates in the touch portion by total internal reflection, and a total internal reflection step length of the light in the touch portion is 0 mm to 6 mm. In this way, it is ensured that the electronic device has better touch precision.

In a possible implementation of the second aspect, a light transmittance of the display cover plate is greater than 80%.

In a possible implementation of the second aspect, a material of the display cover plate is sapphire or glass.

According to a third aspect of this application, an electronic device is provided. The electronic device has a touch function, and includes a display cover plate, a housing, a light-emitting element, and a light-receiving element. The display cover plate includes a touch portion and an edge portion disposed around the touch portion, and the edge portion includes a first edge portion and a second edge portion. The display cover plate and the housing together enclose a cavity, the light-emitting element is disposed in the cavity at a position corresponding to the first edge portion, and the light-receiving element is disposed in the cavity at a position corresponding to the second edge portion. A first light guide member is disposed inside the first edge portion, and the first light guide member extends from a side surface that is of the first edge portion and that faces the light-emitting element to a top surface of the first edge portion. A second light guide member is disposed inside the second edge portion, and the second light guide member extends from a side surface that is of the second edge portion and that faces the light-receiving element to a top surface of the second edge portion.

According to an implementation of this application, the first light guide member may concentrate and guide light emitted by the light-emitting element to the top surface of the first edge portion. A portion of light can exit from the top surface of the first edge portion, and the portion of the light includes light directed toward the top surface of the second edge portion.

However, the electronic device is subjected to water pressure when being placed underwater. Because the first edge portion and the second edge portion are supported by the housing, the first edge portion and the second edge portion do not undergo significant deformation. A top surface of the touch portion is inwardly recessed relative to the top surface of the first edge portion and the top surface of the second edge portion under an action of water pressure. Alternatively, in a possible implementation, a top surface of the touch portion may also include a curved surface that is inwardly recessed relative to the top surface of the first edge portion and the top surface of the second edge portion.

In this way, when the electronic device placed underwater is in a non-touch state, that is, when a user does not touch the touch portion of the display cover plate of the electronic device, light can directly enter the second edge portion from the first edge portion, and then be concentrated and guided by the second light guide member to the light-receiving element.

When the electronic device placed underwater is in a touch state, that is, when the user touches the touch portion of the display cover plate of the electronic device, the user obstructs light propagating on the top surface side of the touch portion, which causes the light-receiving element to be unable to receive the light from the light-emitting element, or intensity of the light received from the light-emitting element to be weak. In this way, touch sensing can be implemented based on light reception by the light-receiving element.

The display cover plate can meet both a sealing requirement and a light propagation requirement, thereby implementing a touch function and a sealing function. Therefore, no light-transmissive sealing member needs to be additionally disposed in the electronic device, thereby reducing thickness space occupied by the light-transmissive sealing member, further effectively reducing an overall size of the electronic device, and facilitating miniaturization development.

In a possible implementation of the third aspect, a top surface of the touch portion includes a curved surface, and the curved surface is recessed relative to the top surface of the first edge portion and the top surface of the second edge portion in a thickness direction of the display cover plate.

In a possible implementation of the third aspect, the light-emitting element is disposed on a bottom surface of the display cover plate, a light-transmissive ink is further disposed on the bottom surface of the display cover plate, the light-transmissive ink is configured to filter out light other than light emitted by the light-emitting element, an orthographic projection of the light-transmissive ink onto a first plane at least partially overlaps an orthographic projection of the light-emitting element onto the first plane, and the first plane is perpendicular to a thickness direction of the display cover plate.

In this way, the light-transmissive ink can prevent light leakage inside the electronic device, and also does not block the light emitted by the light-emitting element, thereby implementing the touch function. Therefore, the light-transmissive ink and the light-emitting element can share a portion of space, thereby effectively reducing a width of a black border of the screen and improving display effect.

### BRIEF DESCRIPTION OF DRAWINGS

FIG. 1 shows an example structure of an electronic device according to an embodiment of this application;
FIG. 2 is a diagram of reflective optical touch according to some embodiments;
FIG. 3 is a diagram of direct optical touch according to some other embodiments;
FIG. 4A is a diagram of a structure of an electronic device according to an embodiment of this application;
FIG. 4B is a diagram of a propagation path of light in an electronic device according to an embodiment of this application;
FIG. 5 is a dimension diagram of an inclination angle of a first inclined surface relative to a first plane according to an embodiment of this application;
FIG. 6A is a diagram of a structure of an electronic device according to an embodiment of this application;
FIG. 6B is a diagram of a propagation path of light in an electronic device according to an embodiment of this application;
FIG. 7A is a diagram of a light-emitting element disposed on a bottom surface of a display cover plate according to an embodiment of this application;
FIG. 7B is a diagram of a light-emitting element disposed on a first inclined surface according to an embodiment of this application;
FIG. 8 shows an example of a manner of disposing a first inclined surface according to an embodiment of this application;
FIG. 9A is a diagram of a structure of an electronic device according to an embodiment of this application;
FIG. 9B is a diagram of a propagation path of light in an electronic device according to an embodiment of this application;
FIG. 10 is a diagram of another structure of a light guide member according to an embodiment of this application; and
FIG. 11 shows an example of a manner of disposing common ink according to an embodiment of this application.

### DESCRIPTION OF EMBODIMENTS

The following describes specific implementations of this application in detail with reference to accompanying drawings.

An electronic device is provided in implementations of this application. The electronic device can implement underwater touch, and an overall size of the electronic device is small, which facilitates miniaturization development.

It may be understood that the electronic device provided in this application includes but is not limited to a wearable device such as a smart watch, a smart band, smart glasses (for example, augmented reality (augmented reality, AR) glasses, virtual reality (virtual reality, VR) glasses, and mixed reality (mixed reality, MR) glasses), and an electronic device such as a mobile phone or a tablet computer (tablet personal computer) that needs to be used underwater or in an environment with high humidity. For ease of description, the following describes technical solutions of this application by using an example in which the electronic device is a smart watch.

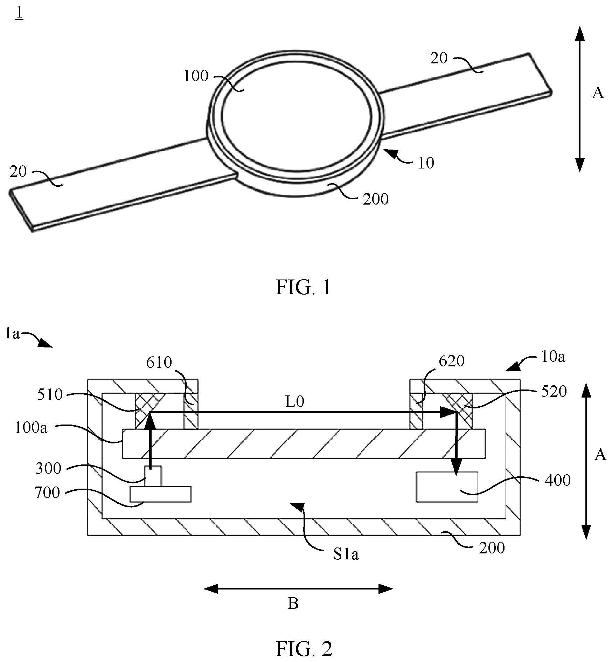

FIG. 1 shows an example structure of an electronic device 1 according to an embodiment of this application. Refer to FIG. 1. The electronic device 1 includes a main body 10 and two watch bands 20. The two watch bands 20 are connected to two opposite sides of the main body 10, and may be detachably lockable with respect to each other, so that the electronic device 1 can be worn on a wrist of a user.

It may be understood that the main body 10 of the electronic device 1 in the example shown in FIG. 1 is a flat cylindrical structure extending in a direction A. The cylindrical structure may include a cylindrical structure and a structure approximately cylindrical (for example, an outer surface of the cylindrical structure may be partially recessed or partially protruded). In another embodiment, the main body 10 may alternatively be a cuboid structure or another irregular structure. This is not limited in this application.

The following describes the technical solutions of this application by using the main body 10 shown in FIG. 1 as an example. Still refer to FIG. 1, in some embodiments of this application, the main body 10 includes a display cover plate 100 and a housing 200. The display cover plate 100 is mounted on the housing 200. When the electronic device 1 is worn on the wrist of the user, the display cover plate 100 of the electronic device 1 faces away from the wrist of the user, and the housing 200 is in contact with the wrist of the user.

The display cover plate 100 and the housing 200 can together form a cavity (not shown in the figure). A touch sensing layer (not shown in the figure), a display assembly (not shown in the figure), and other components may be disposed in the cavity, so that the user can perform human-machine interaction by touching the display cover plate 100, for example, taking a photo by tapping a photo capture button on the display cover plate 100, viewing an image through the display cover plate 100, and the like. For example, a material of the display cover plate 100 may be a light-transmissive material (for example, glass or sapphire), to avoid blocking an image and affecting viewing experience.

In some technical solutions, a capacitive touch solution may be used to implement the foregoing touch function. However, when the user uses a smart watch with capacitive touch underwater, because water is conductive, the user cannot directly implement touch sensing by touching the display cover plate, and needs to use another insulating object (for example, an insulating glove) to push aside the water, and the smart watch implements touch sensing by comparing a capacitance difference between a portion in which the water is pushed aside by the insulating object and a portion in which the water is not pushed aside by the insulating object. However, this manner greatly affects touch experience of the user, and touch accuracy is low. Currently, this manner cannot be applied to an underwater touch scenario.

Therefore, in some other technical solutions, an optical touch solution may be used to implement the touch function.

In some embodiments, a reflective optical touch solution is used to implement the touch function. FIG. 2 is a diagram of reflective optical touch according to some embodiments. Refer to FIG. 2. An electronic device 1a includes a light-emitting element 300, a light-receiving element 400, a first reflection element 510, a second reflection element 520, a first light-transmissive sealing member 610, and a second light-transmissive sealing member 620. A display cover plate 100a, a housing 200, the first light-transmissive sealing member 610, and the second light-transmissive sealing member 620 together enclose a cavity S1a. The light-emitting element 300, the light-receiving element 400, the first reflection element 510, and the second reflection element 520 are all located in the cavity S1a. In addition, in a direction A, the light-emitting element 300 and the first reflection element 510, and the first light-transmissive sealing member 610 are located on two opposite sides of the display cover plate 100a; and the light-receiving element 400 and the second reflection element 520, and the second light-transmissive sealing member 620 are located on two opposite sides of the display cover plate 100a. For example, the light-emitting element 300 may be disposed on a circuit board 700 (printed circuit board, PCB), and the circuit board 700 controls the light-emitting element 300 to emit light.

When the electronic device 1a is in a non-touch state, that is, when a user does not touch the display cover plate 100a, light L0 emitted by the light-emitting element 300 can pass through the display cover plate 100a in the direction A and be incident on the first reflection element 510, and then be reflected by the first reflection element 510 in a direction B to the first light-transmissive sealing member 610. Subsequently, the light exits from the cavity S1a through the first light-transmissive sealing member 610 and propagates above the display cover plate 100a in the direction B, then passes through the second light-transmissive sealing member 620 and is incident on the second reflection element 520, and is then reflected by the second reflection element 520 to the display cover plate 100a, and passes through the display cover plate 100a into the light-receiving element 400.

When the electronic device 1a is in a touch state, that is, when the user touches the display cover plate 100a, a propagation path of the light L0 is obstructed, which causes the light-receiving element 400 to be unable to receive the light L0. In this way, touch sensing can be implemented based on reception of the light L0 by the light-receiving element 400.

In the foregoing reflective optical touch solution, a light-transmissive sealing member (for example, the first light-transmissive sealing member 610 and the second light-transmissive sealing member 620) is disposed on the display cover plate 100a, so that sealing effect of the cavity S1a can be ensured without blocking propagation of the light L0. However, because a light-transmissive sealing member and a structural member for fastening the light-transmissive sealing member need to be additionally disposed, a thickness of a main body 10a is large, and thus an overall size of the electronic device 1a is large. This solution is applicable only to a large-screen device with a large size, and is currently difficult to be applied to an underwater touch scenario of a small-sized device.

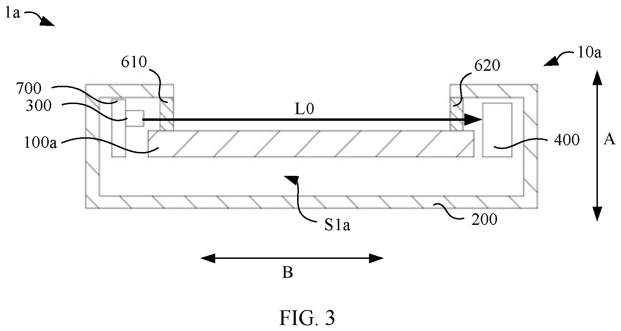

In some other embodiments, a direct optical touch solution is used to implement underwater touch. FIG. 3 is a diagram of direct optical touch according to some other embodiments. Refer to FIG. 3. An electronic device 1a includes a first light-transmissive sealing member 610 and a second light-transmissive sealing member 620, and does not include a reflection element. In a direction B, a light-emitting element 300 and a light-receiving element 400 are respectively disposed on two opposite sides of a display cover plate 100a.

When the electronic device 1a is in a non-touch state, that is, when a user does not touch the display cover plate 100a, light L1 emitted by the light-emitting element 300 can pass through the first light-transmissive sealing member 610 in the direction B, exit from the cavity S1a, and propagate above the display cover plate 100a in the direction B, and then pass through the second light-transmissive sealing member 620 and be incident on the light-receiving element 400. When the electronic device 1a is in a touch state, that is, when the user touches the display cover plate 100a, a propagation path of light L0 is also obstructed, which causes the light-receiving element 400 to be unable to receive the light L0. In this way, touch sensing can be implemented based on reception of the light L0 by the light-receiving element 400.

In the foregoing direct optical touch solution, to implement sealing effect without blocking propagation of the light L0, a light-transmissive sealing member (for example, the first light-transmissive sealing member 610 and the second light-transmissive sealing member 620) also needs to be additionally disposed on the display cover plate 100, and a structural member for fastening the light-transmissive sealing member needs to be additionally disposed, which causes a large thickness of a main body 10a. In addition, because the light-emitting element 300 and the light-receiving element 400 are respectively disposed on two opposite sides of the display cover plate 100a, the light-emitting element 300 and the light-receiving element 400 further occupy additional mounting space, which causes a large bottom surface area of the main body 10a. Therefore, an overall size of the electronic device 1a is large. This solution is also applicable only to a large-screen device with a large size, and is currently difficult to be applied to an underwater touch scenario of a small-sized device.

To resolve the foregoing problem, in this embodiment, light propagation is implemented through the display cover plate, thereby implementing the touch function. Therefore, no light-transmissive sealing member needs to be additionally disposed to implement light transmission and sealing functions, which can effectively reduce an overall size of the electronic device and facilitate miniaturization development. The following describes technical solutions of this application with reference to accompanying drawings.

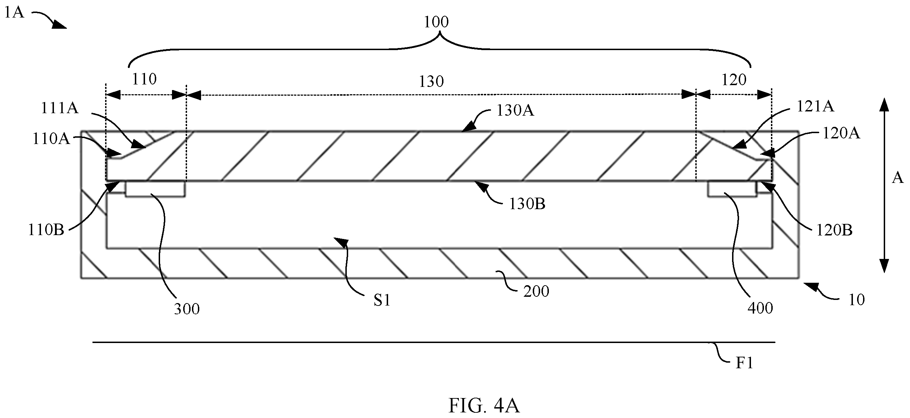

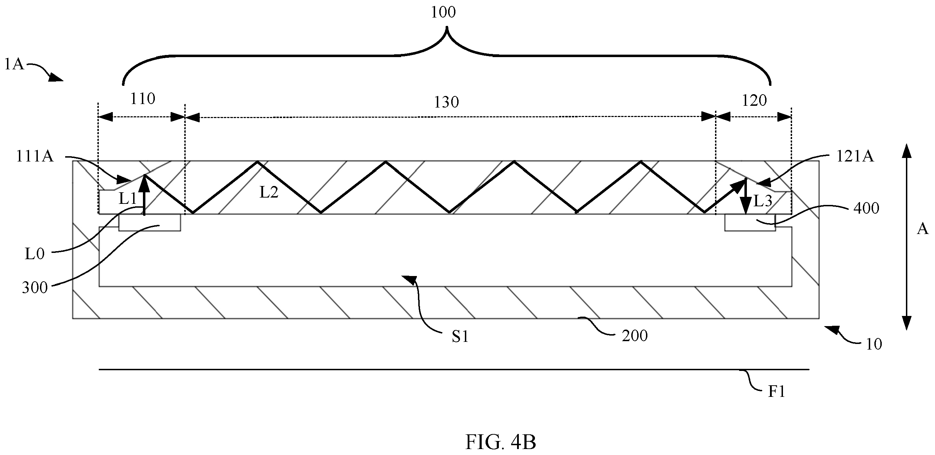

FIG. 4A is a diagram of a structure of an electronic device 1A according to an embodiment of this application. FIG. 4B is a diagram of a propagation path of light L0 in the electronic device 1A according to an embodiment of this application. Refer to FIG. 4A and FIG. 4B. A main body 10 of the electronic device 1A includes a display cover plate 100, a housing 200, a light-emitting element 300, and a light-receiving element 400. The display cover plate 100 and the housing 200 together enclose a cavity S1. The light-emitting element 300 and the light-receiving element 400 are both located in the cavity S1. It may be understood that the cavity S1 is a sealed cavity, to provide waterproof and dustproof functions.

The display cover plate 100 includes a touch portion (for example, a touch portion 130 described below) and an edge portion (for example, a first edge portion 110 and a second edge portion 120 described below). The edge portion is disposed around a periphery of the touch portion, and is connected to the touch portion. The edge portion is configured to implement fastening and mounting of the display cover plate 100. For example, the edge portion may be fastened to the housing 200, to mount the display cover plate 100 on the housing 200. The touch portion 130 is configured to perform touch sensing, image display, and the like.

For example, when the display cover plate 100 is circular as shown in FIG. 1, the touch portion is circular, and the edge portion is annular and disposed around an outer circumference of the touch portion. For another example, when the display cover plate 100 is rectangular, the touch portion is rectangular, and the edge portion includes four sides connected end to end, forming an overall rectangular frame, and is disposed around a periphery of the touch portion.

The light-emitting element 300 and the light-receiving element 400 are disposed at different positions in the cavity S1 corresponding to the edge portion. The light-emitting element 300 is configured to emit light L0. For example, the light-emitting element 300 may include but is not limited to any one of a point light source (for example, a light-emitting diode (light-emitting diode, LED) or a laser diode (laser diode, LD)), a linear light source, or an area light source. A wavelength of the light L0 may cover a range from an ultraviolet band to an infrared band. For example, the light L0 may be infrared light. This is not specifically limited in embodiments of this application. The light-receiving element 400 is configured to receive the light L0 from the light-emitting element 300, convert the light L0 into an electrical signal, and then transmit the electrical signal to a signal processing module (not shown in the figure) in the electronic device 1A, to implement a touch operation. For example, the light-receiving element 400 includes but is not limited to a photodiode (photodiode, PD), a phototransistor, and the like. In some embodiments, there may be a plurality of light-emitting elements 300 and a plurality of light-receiving elements 400. The plurality of light-emitting elements 300 and the plurality of light-receiving elements 400 may be distributed in an array at different positions in the cavity S1 corresponding to the edge portion, and are in one-to-one correspondence. For ease of understanding, the following describes the technical solutions of this application by using a pair of the light-emitting element 300 and the light-receiving element 400 as an example.

It may be understood that the light L0 emitted by the light-emitting element 300 mainly enters the display cover plate 100 from the edge portion of the display cover plate 100 corresponding to the light-emitting element 300, then passes through the touch portion into the edge portion corresponding to the light-receiving element 400, and exits from the display cover plate 100 at the edge portion corresponding to the light-receiving element 400, and enters the light-receiving element 400. Therefore, to facilitate the description of the propagation path of the light L0 in the display cover plate, FIG. 4A is a sectional view of the electronic device 1A in a direction of a connection line between the light-emitting element 300 and the light-receiving element 400.

On the section, the edge portion may include a first edge portion 110 and a second edge portion 120, where the light-emitting element 300 is disposed in the cavity S1 at a position corresponding to the first edge portion 110, and the light-receiving element 400 is disposed in the cavity S1 at a position corresponding to the second edge portion 120.

The following describes an example of the propagation path of the light L0 emitted by the light-emitting element 300 with reference to the accompanying drawings. For ease of understanding, different propagation segments of the light L0 are respectively marked as light L1, light L2, and light L3.

In some implementable solutions, surfaces of the first edge portion 110 and the second edge portion 120 of the display cover plate 100 may be disposed as inclined surfaces, and the inclined surfaces are used as reflective surfaces, thereby enabling propagation of the light L0 inside the display cover plate 100.

For ease of understanding, an example of a structure of the display cover plate 100 is first described with reference to the accompanying drawings before describing the propagation path of the light L0.

Still refer to FIG. 4A and FIG. 4B. The first edge portion 110 includes a top surface 110A and a bottom surface 110B. The second edge portion 120 includes a top surface 120A and a bottom surface 120B. The touch portion 130 includes a top surface 130A and a bottom surface 130B. The top surface 110A, the top surface 130A, and the top surface 120A are sequentially connected to jointly form a top surface of the display cover plate 100. The bottom surface 110B, the bottom surface 130B, and the bottom surface 120B are sequentially connected to jointly form a bottom surface of the display cover plate 100.

In some embodiments of this application, the top surface 110A of the first edge portion 110 includes a first inclined surface 111A. The top surface 120A of the second edge portion 120 includes a second inclined surface 121A. The first inclined surface 111A and the second inclined surface 121A are inclined relative to a first plane F1, that is, the first inclined surface 111A has an inclination angle (for example, an inclination angle α described below) relative to the first plane F1. The first plane F1 is perpendicular to a direction A (as an example of a thickness direction of the display cover plate 100). In the direction A, the light-emitting element 300 is disposed opposite to the first inclined surface 111A of the first edge portion 110, and the light-receiving element 400 is disposed opposite to the second inclined surface 121A of the second edge portion 120.

The first inclined surface 111A of the first edge portion 110 can reflect the light L1 from the light-emitting element 300, thereby forming the light L2.

When the electronic device 1A is in a non-touch state, that is, when a user does not touch the touch portion 130 of the display cover plate 100 of the electronic device 1A, a medium outside the display cover plate 100 may be water, air, or the like. In this case, the light L2 can propagate inside the touch portion 130 by total internal reflection until the light L2 reaches the second inclined surface 121A of the second edge portion 120. Then, the second inclined surface 121A of the second edge portion 120 reflects the light L2, forming the light L3 directed toward the light-receiving element 400.

When the electronic device 1A is in a touch state, that is, when the user touches the touch portion 130 of the display cover plate 100 of the electronic device 1A, the medium outside the display cover plate 100 changes from water or air to another medium (for example, a finger of the user). That is, a refractive index of the medium outside the display cover plate 100 changes, which destroys total internal reflection of the light L2 inside the touch portion 130 of the display cover plate 100, and the light-receiving element 400 cannot receive the light from the light-emitting element 300, or intensity of the light received from the light-emitting element 300 is weak. In this way, touch sensing can be implemented based on light reception by the light-receiving element 400.

The display cover plate 100 can meet both a sealing requirement and a light L0 propagation requirement, thereby implementing a touch function and a sealing function. In addition, propagation of the light L0 inside the display cover plate 100 is implemented. Compared with the solution in which the display cover plate 100a, the housing 200, the first light-transmissive sealing member 610, and the second light-transmissive sealing member 620 together enclose the cavity S1a in the examples shown in FIG. 2 and FIG. 3, in this application, only the display cover plate 100 and the housing 200 are required to enclose the sealed cavity S1, and no light-transmissive sealing member needs to be additionally disposed, thereby reducing thickness space occupied by the light-transmissive sealing member, further effectively reducing an overall size of the electronic device 1A, and facilitating miniaturization development. Meanwhile, the light-transmissive sealing member affecting touch performance due to dust accumulation after long-term use is also effectively avoided.

Moreover, in the examples shown in FIG. 2 and FIG. 3, the first reflection element 510, the second reflection element 520, the first light-transmissive sealing member 610, and the second light-transmissive sealing member 620 are all disposed on the display cover plate 100a, which imposes large supporting pressure on the display cover plate 100a. Furthermore, due to the large quantity of components, waterproof processing needs to be performed between all the components, making waterproofing difficult and unfavorable for implementing underwater touch. In contrast, in this application, there is no need to additionally dispose a component such as a reflector or a light-transmissive sealing member on the display cover plate 100, resulting in a simpler structure, smaller supporting pressure on the display cover plate 100, and better reliability. Moreover, the quantity of components is smaller, thereby effectively reducing waterproof difficulty.

Finally, compared with a current capacitive touch solution, the electronic device provided in this application can implement underwater touch without using an insulating medium, which is easy to operate and provides better underwater touch experience.

The following describes an example of a manner of disposing the inclination angle α of the first inclined surface 111A relative to the first plane F1 with reference to the accompanying drawings.

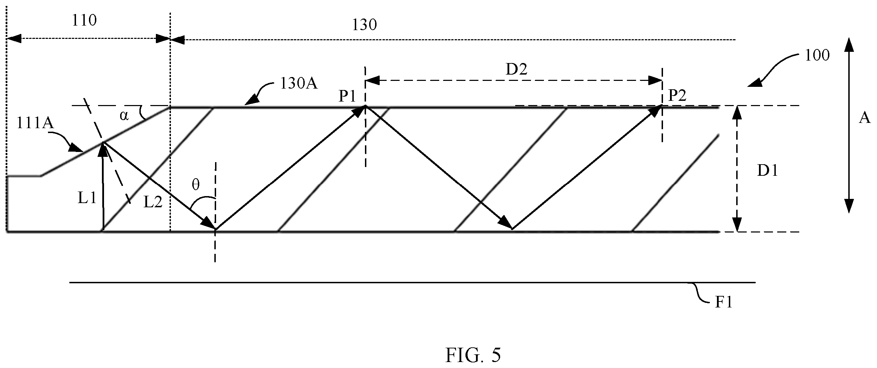

FIG. 5 is a dimension diagram of the inclination angle α of the first inclined surface 111A relative to the first plane F1 according to an embodiment of this application. Refer to FIG. 5. If the inclination angle α of the first inclined surface 111A relative to the first plane F1 is too small, an incident angle θ (θ=2α) of the light L2 incident on the touch portion 130 is too small to meet a total internal reflection condition for the electronic device 1A in a non-touch state. That is, when the electronic device 1A is in the non-touch state, the light L2 cannot propagate inside the touch portion 130 by total internal reflection. If the inclination angle α of the first inclined surface 111A relative to the first plane F1 is too large, the incident angle θ of the light L2 incident on the touch portion 130 is too large, and meets total internal reflection conditions for both the touch state and the non-touch state of the electronic device 1A. That is, when the electronic device 1A is in the touch state, the light L2 can still propagate inside the touch portion 130 by total internal reflection.

Therefore, in some embodiments of this application, the inclination angle α of the first inclined surface 111A relative to the first plane F1 may be 16° to 43°, so that the incident angle θ of the light L2 incident on the touch portion 130 can meet the total internal reflection condition for the electronic device 1A in the non-touch state, while not meeting the total internal reflection condition for the electronic device 1A in the touch state. Therefore, when the electronic device 1A is in the non-touch state, the light L2 can propagate inside the touch portion 130 by total internal reflection; and when the electronic device 1A is in the touch state, the light L2 cannot propagate inside the touch portion 130 by total internal reflection, thereby implementing touch sensing.

Refer to FIG. 5. In some embodiments of this application, the inclination angle α of the first inclined surface 111A relative to the first plane F1 and the incident angle θ of the light L2 incident on the touch portion 130 may satisfy the following relational expression: $α = 0.5 θ \pm β$ (1) $arcsin \left({n}_{1}/{n}_{0}\right) < θ \leq arcsin \left({n}_{2}/{n}_{0}\right)$ (2)

In formula (1), β is a fluctuation range of a machining angle error. For example, β may be 0° to 8°, for example, 0°, 1°, or 2°. In formula (2), n0 is a refractive index of the display cover plate 100, n1 is a refractive index of a medium outside the display cover plate 100 when the electronic device 1A is in a non-touch state, and n2 is a refractive index of the medium outside the display cover plate 100 when the electronic device 1A is in a touch state.

For example, it is assumed that β is 5°. A material of the display cover plate 100 is sapphire, and a refractive index n0=1.77. When the electronic device 1A is in the non-touch state, the medium outside the display cover plate 100 is water, and a refractive index n1=1.33, and *arcsin* ( *n*₁ /*n*₀)=48.71°. When the electronic device 1A is in the touch state, the medium outside the display cover plate 100 is a finger of the user, and a refractive index n2=1.4, and *arcsin* ( *n*₂ /*n*₀)=52.27°.

When the inclination angle α of the first inclined surface 111A relative to the first plane F1 is 25°±5°, the corresponding incident angle θ of the light L2 incident on the touch portion 130 may be 50°, and is between 48.71° and 52.27°, so that the total internal reflection condition for the electronic device 1A in the non-touch state is met, and the total internal reflection condition for the electronic device 1A in the touch state is not met, thereby implementing underwater touch sensing.

For another example, it is assumed that β is 8°. A material of the display cover plate 100 is glass, and a refractive index n0=1.51. When the electronic device 1A is in the non-touch state, the medium outside the display cover plate 100 is water, and a refractive index n1=1.33, and *arcsin* ( *n*₁ /*n*₀)=61.74°. When the electronic device 1A is in the touch state, the medium outside the display cover plate 100 is a finger of the user, and a refractive index n2=1.4, and *arcsin* ( *n*₂ /*n*₀)=70°.

When the inclination angle α of the first inclined surface 111A relative to the first plane F1 is 32°±8°, the corresponding incident angle θ of the light L2 incident on the touch portion 130 may be 64°, and is between 61.74° and 70°, so that the total internal reflection condition for the electronic device 1A in the non-touch state is met, and the total internal reflection condition for the electronic device 1A in the touch state is not met, thereby implementing underwater touch sensing.

In addition, because a refractive index of air is less than a refractive index of water, the electronic device 1A provided in this application can further implement touch sensing in air while implementing underwater touch sensing.

It may be understood that a manner of disposing the second inclined surface 121A is substantially the same as a manner of disposing the first inclined surface 111A. For details, refer to the foregoing related descriptions of the first inclined surface 111A. Details are not described herein again.

Still refer to FIG. 5. In some embodiments of this application, a thickness D1 of the touch portion 130 of the display cover plate 100 is 0.8 mm to 2.5 mm, for example, 0.8 mm, 0.9 mm, or 2.5 mm. In this way, it can be ensured that the touch portion 130 of the display cover plate 100 is neither too thin and thus prone to breakage, nor too thick as to cause an excessively large total internal reflection step length D2 of the light L2 inside the touch portion 130, thereby causing excessively low touch precision. In some embodiments, the total internal reflection step length D2 of the light L2 in the touch portion 130 is 0 mm to 6 mm.

Each time the light L2 encounters the top surface 130A of the touch portion 130, total internal reflection occurs at a position on the top surface 130A of the touch portion 130, and a distance between any two adjacent positions is referred to as a total internal reflection step length. For example, a distance between a position P1 and a position P2 is the total internal reflection step length D2 of the light L2 in the touch portion 10.

It may be understood that a smaller total internal reflection step length D2 of the light L2 in the touch portion 130 indicates a larger quantity of times of total internal reflection of the light L2 occurring at the top surface 130A of the touch portion 130. When the user touches the touch portion 130, total internal reflection propagation of the light L2 is more likely to be affected, that is, touch precision is higher.

Refer to FIG. 5. In some embodiments of this application, the total internal reflection step length D2 of the light L2 in the touch portion 130 and the thickness D1 of the touch portion 130 of the display cover plate 100 may satisfy the following relational expression: $D 2 = 2 D 1 tanθ$ (3)

In formula (3), θ is an incident angle of the light L2 incident on the touch portion 130.

For example, according to the foregoing embodiments, it is assumed that the display cover plate 100 is sapphire, and θ is 50°. When the thickness D1 of the touch portion 130 is 0.8 mm, the total internal reflection step length D2 of the light L2 in the touch portion 130 may be set to 1.91 mm. For another example, it is assumed that the display cover plate 100 is glass, and θ is 64°. When the thickness D1 of the touch portion 130 is 0.8 mm, the total internal reflection step length D2 of the light L2 in the touch portion 130 may be set to 3.28 mm.

It may be understood that the foregoing size parameter is merely an example for description. In another embodiment, another size parameter may be set according to an actual requirement.

For example, in some embodiments, the display cover plate 100 may also be made of another material, for example, any other material whose light transmittance is greater than 80%. Correspondingly, the refractive index n0 may be another value.

For another example, in some embodiments, when the electronic device 1A is in the non-touch state, the medium outside the display cover plate 100 may alternatively be another medium, for example, air. Correspondingly, the refractive index n1 may be another value.

For another example, in some embodiments, when the electronic device 1A is in the touch state, the medium outside the display cover plate 100 may alternatively be another medium, for example, a stylus. Correspondingly, the refractive index n2 may be another value.

In some other implementable solutions, the first inclined surface 111A of the first edge portion 110 and the second inclined surface 121A of the second edge portion 120 may alternatively be used as transmissive surfaces, thereby enabling propagation of the light L0 inside the display cover plate 100.

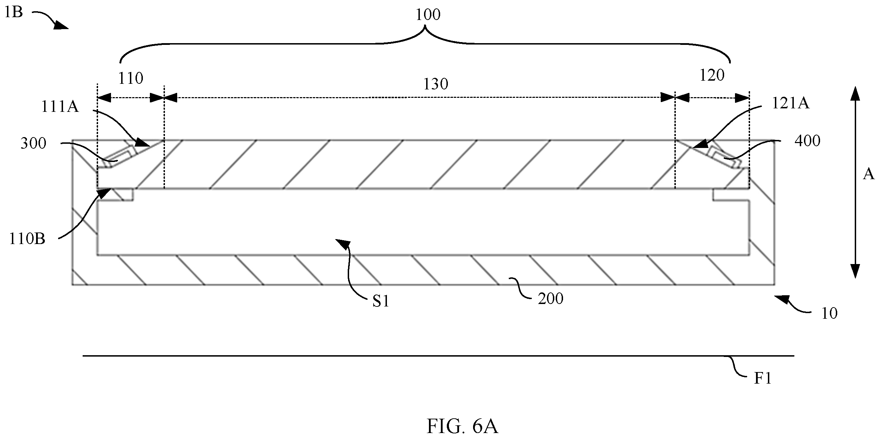

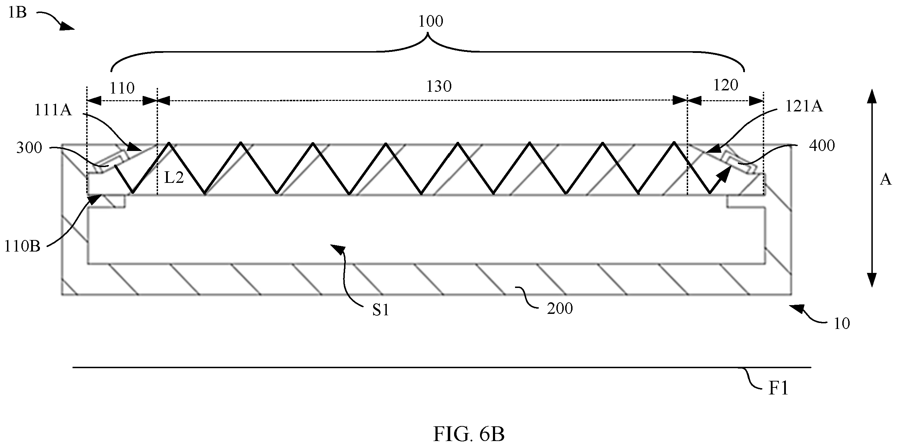

Specifically, FIG. 6A is a diagram of a structure of an electronic device 1B according to an embodiment of this application. FIG. 6B is a diagram of a propagation path of light L2 in the electronic device 1B according to an embodiment of this application. Compared with the electronic device 1A shown in FIG. 4A and FIG. 4B, a difference between the electronic device 1B and the electronic device 1A lies in that functions of the first inclined surface 111A and the second inclined surface 121A are different. Detailed descriptions are provided below with reference to accompanying drawings.

Refer to FIG. 6A and FIG. 6B. A light-emitting element 300 is disposed on a first inclined surface 111A of a first edge portion 110, and a light-receiving element 400 is disposed on a second inclined surface 121A of a second edge portion 120. Light emitted by the light-emitting element 300 may enter the first edge portion 110 through the first inclined surface 111A, then undergo total internal reflection in the touch portion 130 before entering the second edge portion 120, and enter the light-receiving element 400 through the second inclined surface 121A. In this case, a propagation path of the light in the display cover plate 100 is equivalent to that of the light L2.

When the electronic device 1B is in a non-touch state, that is, when a user does not touch the touch portion 130 of the display cover plate 100 of the electronic device 1B, a medium outside the display cover plate 100 may be water, air, or the like. In this case, the light L2 can propagate inside the touch portion 130 by total internal reflection until the light L2 reaches the second inclined surface 121A of the second edge portion 120, and passes through the second inclined surface 121A into the light-receiving element 400.

When the electronic device 1B is in a touch state, that is, when the user touches the touch portion 130 of the display cover plate 100 of the electronic device 1B, the medium outside the display cover plate 100 changes from water or air to another medium (for example, a finger of the user). That is, a refractive index of the medium outside the display cover plate 100 changes, which destroys total internal reflection of the light L2 inside the touch portion 130 of the display cover plate 100, and the light-receiving element 400 cannot receive the light from the light-emitting element 300, or intensity of the light received from the light-emitting element 300 is weak. In this way, touch sensing can be implemented based on light reception by the light-receiving element 400.

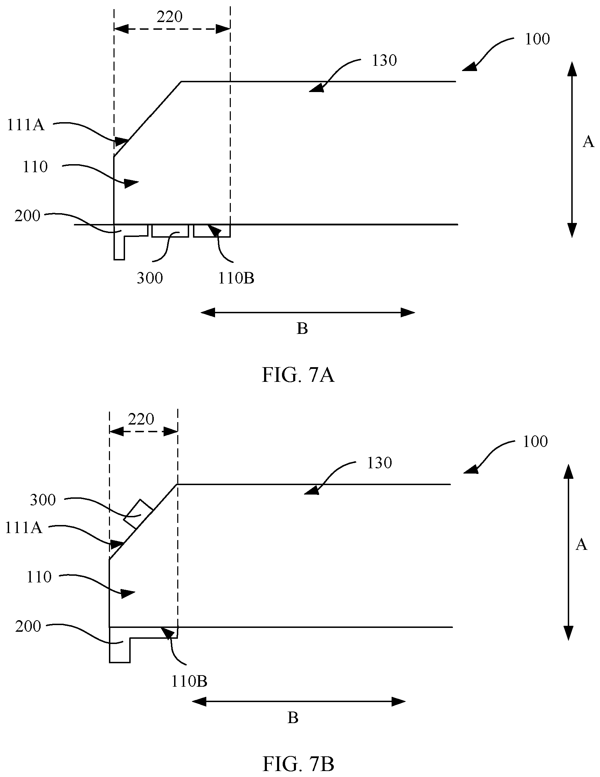

FIG. 7A is a diagram of the light-emitting element 300 disposed on a bottom surface of the display cover plate 100 according to an embodiment of this application. FIG. 7B is a diagram of the light-emitting element 300 disposed on the first inclined surface 111A according to an embodiment of this application.

Comparing FIG. 7A and FIG. 7B, when the light-emitting element 300 is disposed on the bottom surface 110B of the first edge portion 110, the light-emitting element 300 and a portion of the housing 200 for supporting the display cover plate 100 occupy larger space in the direction B, thereby forming a wider black border 220 of the screen. However, in this application, the light-emitting element 300 is disposed on the first inclined surface 111A. Therefore, only the portion of the housing 200 for supporting the display cover plate 100 needs to be disposed on the bottom surface of the display cover plate 100, thereby effectively reducing the width of the black border 220 of the screen (for example, a dimension in the direction B), and improving display effect.

In addition, another structure of the electronic device 1B and a deformation manner of the electronic device 1B are substantially the same as those of the electronic device 1A shown in FIG. 4A and FIG. 4B. For example, a manner of setting the incident angle θ of the light L2 incident on the touch portion 130 in the electronic device 1B is substantially the same as that in the electronic device 1A. Details are not described herein again.

For another example, a manner of setting the inclination angle α of the first inclined surface 111A relative to the first plane F1 in the electronic device 1B is substantially the same as that in the electronic device 1A, provided that the incident angle θ of the light L2 incident on the touch portion 130 meets the total internal reflection condition for the electronic device 1B in the non-touch state while not meeting the total internal reflection condition for the electronic device 1B in the touch state. Details are not described herein. For example, in this embodiment of this application, θ=α, and the inclination angle α of the first inclined surface 111A relative to the first plane F1 may be 41° to 78°.

For another example, the thickness D1 of the touch portion 130 of the display cover plate 100 and the total internal reflection step length D2 of the light L2 in the touch portion 130 in the electronic device 1B are substantially the same as those in the electronic device 1A. Details are not described herein.

It may be understood that the foregoing embodiments are merely illustrative examples in which the top surface 110A of the first edge portion 110 of the display cover plate 100 includes the first inclined surface 111A, and the top surface 120A of the second edge portion 120 includes the second inclined surface 121A. However, this application is not limited thereto. In some other embodiments, the inclined surface may be further disposed in another manner. This is not limited in this application, provided that the light L0 can be propagated inside the display cover plate 100.

For example, in some other embodiments of this application, the bottom surface 110B of the first edge portion 110 may include a first inclined surface, the bottom surface 120B of the second edge portion 120 may include a second inclined surface, and the first inclined surface and the second inclined surface are inclined relative to the first plane F1 in opposite directions.

For another example, in some other embodiments of this application, the top surface 110A of the first edge portion 110 may include a first inclined surface, the bottom surface 120B of the second edge portion 120 may include a second inclined surface, and the first inclined surface and the second inclined surface are inclined relative to the first plane F1 in the same direction. Alternatively, the bottom surface 110B of the first edge portion 110 may include a first inclined surface, the top surface 120A of the second edge portion 120 may include a second inclined surface, and the first inclined surface and the second inclined surface are inclined relative to the first plane F1 in the same direction.

For another example, in this embodiment, one end of the first inclined surface 111A of the top surface 110A of the first edge portion 110 is directly connected to the top surface 130A of the touch portion 130A, and the other end of the first inclined surface 111A is connected to a side surface of the first edge portion 110 through a plane parallel to the first plane F1. That is, the top surface 110A of the first edge portion 110 includes a plane parallel to the first plane F1 and the first inclined surface 111A inclined relative to the first plane F1, and the plane is connected to the top surface 130A of the touch portion 130 through the first inclined surface 111A.

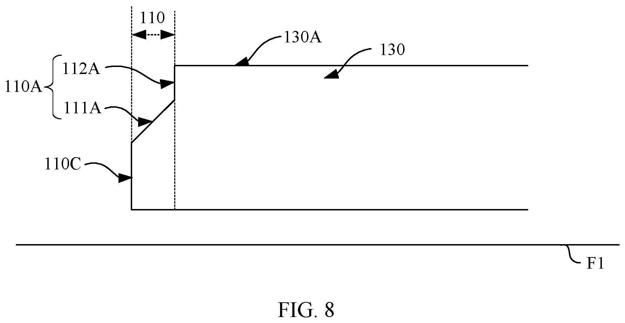

In another embodiment, the first inclined surface 111A of the first edge portion 110 may alternatively be disposed on the top surface 110A of the first edge portion 110 in another manner. For example, FIG. 8 shows an example of a manner of disposing the first inclined surface 111A according to an embodiment of this application. Refer to FIG. 8. In some embodiments, the top surface 110A of the first edge portion 110 includes a first inclined surface 111A and a plane 112A perpendicular to the first plane F1. One end of the first inclined surface 111A is connected to the top surface 130A of the touch portion 130 through the plane 112A, and the other end of the first inclined surface 111A is directly connected to a side surface 110C of the first edge portion 110.

For another example, the top surface 110A of the first edge portion 110 may include the first inclined surface 111A, and does not include a plane parallel or perpendicular to the first plane F1. That is, one end of the first inclined surface 111A is directly connected to the top surface 130A of the touch portion 130, and the other end of the first inclined surface 111A is directly connected to the side surface 110C of the first edge portion 110.

In addition, it should be noted that both the top surface 130A and the bottom surface 130B of the touch portion 130 shown in the foregoing figures are planes. In another embodiment, the top surface 130A and the bottom surface 130B of the touch portion 130 may alternatively be curved surfaces. For example, the top surface 130A and the top surface 130B may be inwardly recessed with a small radian or outwardly protruded with a small radian. This is not limited in this application, provided that the touch sensing function can be implemented.

In some other implementable solutions, the electronic device 1C is subjected to water pressure when being placed underwater. Because the first edge portion 110 and the second edge portion 120 are supported by the housing 200, the first edge portion 110 and the second edge portion 120 do not undergo significant deformation. The top surface 130A of the touch portion 130 is inwardly recessed in the direction A relative to the top surface 110A of the first edge portion 110 and the top surface 120A of the second edge portion 120 under an action of water pressure. In this way, the light emitted by the light-emitting element 300 can exit from the top surface 110A of the first edge portion 110, then directly enter the top surface 120A of the second edge portion 120, and further reach the light-receiving element 400 without passing through the inside of the touch portion 130.

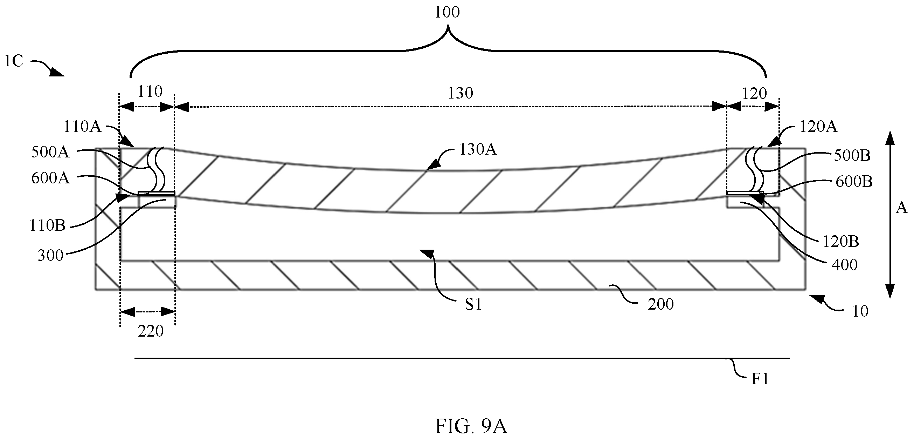

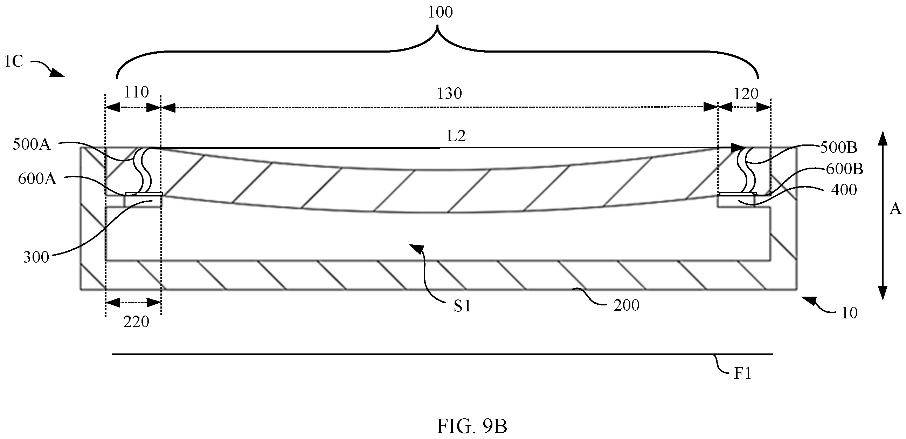

Specifically, FIG. 9A is a diagram of a structure of an electronic device 1C underwater according to an embodiment of this application. FIG. 9B is a diagram of a propagation path of light L2 in the electronic device 1C according to an embodiment of this application. Compared with the electronic device 1A shown in FIG. 4A and FIG. 4B, a difference between the electronic device 1C and the electronic device 1A lies in that propagation manners of the light L2 are different. The following describes in detail with reference to the accompanying drawings.

A light guide member 500A (as an example of a first light guide member) is disposed inside a first edge portion 110. The light guide member 500A extends from a side surface (for example, a bottom surface 110B) that is of the first edge portion 110 and that faces a light-emitting element 300 to a top surface 110A of the first edge portion 110.

A light guide member 500B (as an example of a second light guide member) is disposed inside a second edge portion 120. The light guide member 500B extends from a top surface 120A of the second edge portion 120 to a side surface (for example, a bottom surface 120B) that is of the second edge portion 120 and that faces a light-receiving element 400.

A light outlet of the light guide member 500A corresponds to a light inlet of the light guide member 500B. For example, in a direction A, a distance between the light outlet of the light guide member 500A and a bottom of a housing 200 is the same as a distance between the light inlet of the light guide member 500B and the bottom of the housing 200.

Based on this, light emitted by the light-emitting element 300 can be concentrated and guided by the light guide member 500A to the top surface 110A of the first edge portion 110. A portion of the light can exit from the top surface 110A of the first edge portion 110, and the portion of the light includes the light L2 directed toward the top surface 120A of the second edge portion 120.

When the electronic device 1C placed underwater is in a non-touch state, that is, when a user does not touch a touch portion 130 of a display cover plate 100 of the electronic device 1C, the light L2 can directly enter the second edge portion 120 from the first edge portion 110, and then be concentrated and guided by the light guide member 500B to the light-receiving element 400.

When the electronic device 1C placed underwater is in a touch state, that is, when the user touches the touch portion 130 of the display cover plate 100 of the electronic device 1C, the user obstructs the light L2 propagating on a top surface 130A side of the touch portion 130, which causes the light-receiving element 400 to be unable to receive the light from the light-emitting element 300 or intensity of the light received from the light-emitting element 300 to be weak. In this way, touch sensing can be implemented based on light reception by the light-receiving element 400.

In some other embodiments of this application, the top surface 130A of the touch portion 130 may also include a curved surface, and the curved surface is inwardly recessed relative to the top surface 110A of the first edge portion 110 and the top surface 120A of the second edge portion 120 in the direction A. In this way, the light L2 can be directed from the first edge portion 110 directly toward the second edge portion 120.

Still refer to FIG. 9A and FIG. 9B. In some embodiments of this application, the light guide member 500A and the light guide member 500B may be optical fibers. For example, the light guide member 500A and the light guide member 500B may be approximately S-shaped. In another embodiment, the light guide member 500A and the light guide member 500B may alternatively have other forms. This is not limited in this application, provided that light guide effect can be implemented.

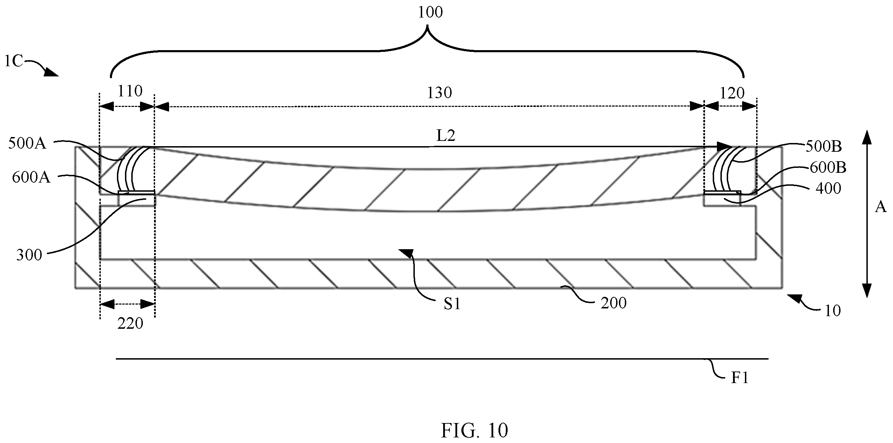

For example, FIG. 10 is a diagram of another structure of the light guide member 500A and the light guide member 500B according to an embodiment of this application. Refer to FIG. 10. The light guide member 500A and the light guide member 500B may alternatively be approximately L-shaped.

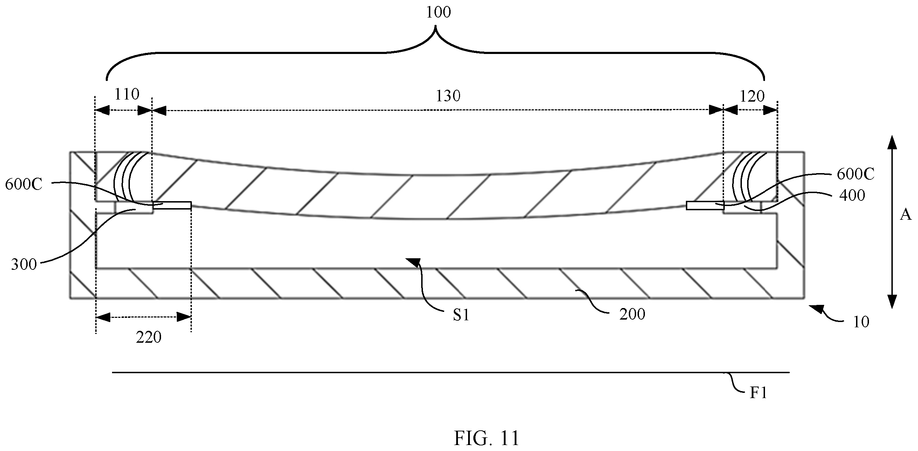

In some embodiments, ink is further disposed on the display cover plate 100 to prevent light leakage. For example, FIG. 11 shows an example of a manner of disposing common ink 600C according to an embodiment of this application. Refer to FIG. 11. The common ink 600C is disposed on a bottom surface of the display cover plate 100. Because the common ink 600C does not have a characteristic of selective light transmission, light of any wavelength is blocked. Therefore, the common ink 600C, the light-emitting element 300, and the light-receiving element 400 are staggered on the bottom surface of the display cover plate 100, to avoid blocking the light emitted by the light-emitting element 300 and to avoid blocking the light received by the light-receiving element 400. This causes the common ink 600C, the light-emitting element 300, and the light-receiving element 400 to occupy large space in a direction along the first plane F1, thereby forming a wide black border 220 of the screen.

Therefore, as shown in FIG. 9A, FIG. 9B, and FIG. 10, in some embodiments of this application, a light-transmissive ink 600A and a light-transmissive ink 600B that are selectively transmissive may be disposed on the bottom surface of the display cover plate 100.

Specifically, an orthographic projection of the light-transmissive ink 600A onto the first plane F1 at least partially overlaps an orthographic projection of the light-emitting element 300 onto the first plane F1, and an orthographic projection of the light-transmissive ink 600B onto the first plane F1 at least partially overlaps an orthographic projection of the light-receiving element 400 onto the first plane F1. In addition, the light-transmissive ink 600A and the light-transmissive ink 600B can transmit the light emitted by the light-emitting element 300 and filter out light other than the light emitted by the light-emitting element 300.

In this way, the light-transmissive ink 600A and the light-transmissive ink 600B can prevent light leakage inside the electronic device 1C, and also do not block the light emitted by the light-emitting element 300, thereby implementing the touch function. Therefore, the light-transmissive ink 600A and the light-emitting element 300 can share a portion of space along the first plane F1, and the light-transmissive ink 600B and the light-receiving element 400 can share a portion of space along the first plane F1, thereby effectively reducing a width of a black border 220 of the screen (for example, a dimension along the first plane F1) and improving display effect.

It may be understood that the foregoing embodiments are merely illustrative examples in which the light-emitting element 300 is disposed on the bottom surface 110B side of the first edge portion 110, and the light-receiving element 400 is disposed on the bottom surface 120B side of the second edge portion 120. However, this application is not limited thereto. In some other embodiments, the light-emitting element 300 and the light-receiving element 400 may be alternatively disposed in other manners. This is not limited in this application.

For example, the light-emitting element 300 may be disposed on a side portion of the first edge portion 110, and the light guide member 500A extends from the side portion of the first edge portion 110 to the top surface 110A of the first edge portion 110, to guide the light emitted by the light-emitting element 300 from the side portion of the first edge portion 110 to the top surface 110A of the first edge portion 110. Similarly, the light-receiving element 400 may be disposed on a side portion of the second edge portion 120, and the light guide member 500B extends from the side portion of the second edge portion 120 to the top surface 120A of the second edge portion 120, to guide the light L2 from the top surface 120A of the second edge portion 120 to the light-receiving element 400.

The foregoing describes implementations of this application in specific embodiments, and other advantages and effects of this application may be readily understood by a person skilled in the art from content disclosed in this specification. Although this application is described with reference to some embodiments, it does not mean that a characteristic of this application is limited only to this implementation. On the contrary, a purpose of describing this application with reference to an implementation is to cover another option or modification that may be derived based on claims of this application. This application may be alternatively implemented without using these details. In addition, to avoid confusion or obscuring a focus of this application, some specific details are omitted in the description. It should be noted that embodiments in this application and the features in embodiments may be mutually combined in the case of no conflict.

In the descriptions of this application, it should be noted that, orientations or position relationships indicated by terms such as "center", "up", "down", "left", "right", "vertical", "horizontal", "outer side", "inner side", "circumferential direction", "radial direction", and "axial direction" are based on the orientations or position relationships shown in the accompanying drawings, and are merely intended to describe this application and simplify the descriptions, but are not intended to indicate or imply that an indicated apparatus or element needs to have a specific orientation or be constructed and operated in a specific orientation, and therefore cannot be understood as a limitation on this application.

In the descriptions of this application, it should be noted that unless otherwise explicitly specified and limited, terms such as "dispose", "mount", "connect", and "attach" should be understood in a broad sense. For example, such terms may indicate a fixed connection, a detachable connection, or an integral connection, may indicate a mechanical connection or an electrical connection, and may indicate a direct connection, an indirect connection through an intermediate medium, or internal communication between two elements. A person of ordinary skill in the art may understand a specific meaning of the foregoing term in this application according to a specific situation.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An electronic device, wherein the electronic device has a touch function, and comprises a display cover plate, a housing, a light-emitting element, and a light-receiving element, wherein
the display cover plate comprises a touch portion and an edge portion disposed around the touch portion, the edge portion comprises a first edge portion and a second edge portion, the first edge portion comprises a first inclined surface, the first inclined surface is inclined relative to a first plane, the second edge portion comprises a second inclined surface, the second inclined surface is inclined relative to the first plane, and the first plane is perpendicular to a thickness direction of the display cover plate; and
the display cover plate and the housing together enclose a cavity, the light-emitting element is disposed in the cavity at a position corresponding to the first inclined surface of the first edge portion, and the light-receiving element is disposed in the cavity at a position corresponding to the second inclined surface of the second edge portion.

2. The electronic device according to claim 1, wherein an inclination angle of the first inclined surface relative to the first plane is 16° to 43°.

3. The electronic device according to claim 1, wherein a thickness of the touch portion is 0.8 mm to 2.5 mm.

4. The electronic device according to claim 1, wherein light emitted by the light-emitting element propagates in the touch portion by total internal reflection, and a total internal reflection step length of the light in the touch portion is 0 mm to 6 mm.

5. The electronic device according to claim 1, wherein a light transmittance of the display cover plate is greater than 80%.

6. The electronic device according to claim 1, wherein a material of the display cover plate is sapphire or glass.

7. An electronic device, wherein the electronic device has a touch function, and comprises a display cover plate, a light-emitting element, and a light-receiving element, wherein
the display cover plate comprises a touch portion and an edge portion disposed around the touch portion, the edge portion comprises a first edge portion and a second edge portion, the first edge portion comprises a first inclined surface, the first inclined surface is inclined relative to a first plane, the second edge portion comprises a second inclined surface, the second inclined surface is inclined relative to the first plane, and the first plane is perpendicular to a thickness direction of the display cover plate; and
the light-emitting element is disposed on the first inclined surface of the first edge portion, and the light-receiving element is disposed on the second inclined surface of the second edge portion.

8. The electronic device according to claim 7, wherein an inclination angle of the first inclined surface relative to the first plane is 41° to 78°.

9. The electronic device according to claim 7, wherein a thickness of the touch portion is 0.8 mm to 2.5 mm.

10. The electronic device according to claim 7, wherein light emitted by the light-emitting element propagates in the touch portion by total internal reflection, and a total internal reflection step length of the light in the touch portion is 0 mm to 6 mm.

11. The electronic device according to claim 7, wherein a light transmittance of the display cover plate is greater than 80%.

12. The electronic device according to claim 7, wherein a material of the display cover plate is sapphire or glass.

13. An electronic device, wherein the electronic device has a touch function, and comprises a display cover plate, a housing, a light-emitting element, and a light-receiving element, wherein
the display cover plate comprises a touch portion and an edge portion disposed around the touch portion, and the edge portion comprises a first edge portion and a second edge portion;
the display cover plate and the housing together enclose a cavity, the light-emitting element is disposed in the cavity at a position corresponding to the first edge portion, and the light-receiving element is disposed in the cavity at a position corresponding to the second edge portion;
a first light guide member is disposed inside the first edge portion, and the first light guide member extends from a side surface that is of the first edge portion and that faces the light-emitting element to a top surface of the first edge portion; and
a second light guide member is disposed inside the second edge portion, and the second light guide member extends from a side surface that is of the second edge portion and that faces the light-receiving element to a top surface of the second edge portion.

14. The electronic device according to claim 13, wherein a top surface of the touch portion comprises a curved surface, and the curved surface is recessed relative to the top surface of the first edge portion and the top surface of the second edge portion in a thickness direction of the display cover plate.

15. The electronic device according to claim 13, wherein the light-emitting element is disposed on a bottom surface of the display cover plate, a light-transmissive ink is further disposed on the bottom surface of the display cover plate, the light-transmissive ink is configured to filter out light other than light emitted by the light-emitting element, an orthographic projection of the light-transmissive ink onto a first plane at least partially overlaps an orthographic projection of the light-emitting element onto the first plane, and the first plane is perpendicular to a thickness direction of the display cover plate.
